# DEMANDE DE BREVET EUROPEEN

(11) **EP 0 694 433 A1**
(43) Date de publication de la demande: **31.01.1996**
(21) Numéro de dépôt: 94420223.3
(22) Date de dépôt: 29.07.1994
(51) Int. Cl.: B60M 7/00, H02G 3/18, G07F 17/00, E01F 13/04

(54) **Borne de distribution d'énergie électrique**

(71) Demandeur: ELECTRICITE DE FRANCE, F-75008 Paris (FR)
(72) Inventeur: Le Grevellec, Florence, F-69005 Lyon (FR); Riberolles, Jean-Louis, F-69300 Caluire (FR)
(74) Mandataire: Laurent, Michel

(57) **Abrégé**

Cette borne de distribution d'énergie électrique est munie d'un socle (10, 23) de raccordement au niveau duquel est susceptible d'être branchée la fiche mâle (15) de tout appareil électrique.

Cette borne est escamotable et est constituée d'un chassis (1, 13) encastré dans le sol ou dans un mur, obturé par une trappe (3, 14) articulée (4) sur le châssis (1, 13), éventuellement verrouillable, libérant l'accès à un compartiment (2) intégrant le socle de raccordement (10, 23) de ladite fiche (15), ledit compartiment étant complètement escamotable au sein du chassis.

Par ailleurs, la borne est reliée à une borne de paiement assurant la gestion de sa mise sous tension.

## Description

L'invention concerne une borne de distribution d'énergie électrique. Elle concerne de manière plus spécifique, bien que non limitativement, une telle borne destinée à être associée à une installation de délivrance d'énergie électrique comprenant une pluralité de telles bornes.

De nombreux usagers sont demandeurs d'énergie électrique, notamment sur la voie publique, afin de pouvoir faire fonctionner, soit un ou plusieurs appareils électriques, soit des appareils électriques de chauffage, voire permettre la recharge de batteries ou accumulateurs. Ce problème se pose tout particulièrement aux permissionnaires de marché, mais également aux forains, aux amateurs de camping, caravaning, nautisme, qui lorsqu'ils louent un emplacement, typiquement un camping ou un anneau dans un port, sont soumis au paiement d'une somme forfaitaire afin de pouvoir disposer de courant au niveau d'une prise électrique.

Cela concerne également les utilisateurs de voitures ou véhicules fonctionnant à l'énergie électrique lorsqu'ils doivent procéder à la recharge de leur batterie ou accumulateur.

Il existe aujourd'hui des bornes de distribution. Ces bornes peuvent être soit de simples bornes de raccordement au réseau avec une installation de paiement indépendante, soit intégrées en elles-même à un tel dispositif de paiement ou de prépaiement par monétique ou par carte.

Elles sont généralement imposantes et altèrent de manière relativement importante l'esthétique de la voie publique. Parallèlement, elles font l'objet de vandalisme entraînant des surcoûts de maintenance et donc des frais de fonctionnement élevés.

Enfin, certaines d'entre elles sont d'une conception telle que la fraude est relativement aisément réalisable, en couplant la prise de raccordement au réseau.

L'objet de l'invention est de proposer une borne de distribution d'énergie électrique s'affranchissant de ces différents inconvénients.

Cette borne de distribution d'énergie électrique, munie d'une prise de raccordement au niveau de laquelle il suffit de brancher tout appareil électrique, est constituée d'un chassis encastré dans le sol ou dans un mur, obturé par une trappe éventuellement verrouillable, et au niveau duquel est articulé un boîtier intégrant la prise de raccordement, ledit boîtier étant complètement escamotable au sein du chassis. En outre, la borne est reliée à une borne de paiement assurant la gestion de sa mise sous tension

En d'autres termes, l'invention propose une borne totalement escamotable, notamment au sein du sol et, qui ne fait saillie par rapport au sol qu'en phase d'utilisation.

Selon une caractéristique alternative de l'invention, le boîtier comporte un capot de verrouillage, susceptible d'interdire l'accès à la prise de raccordement, notamment en cours d'utilisation.

Ce capot, articulé au niveau du boîtier présente une découpe de dimensions suffisamment étroites pour n'autoriser que le seul passage de câble électrique prolongeant la prise mâle venant s'enficher dans la prise femelle de raccordement électrique dudit boîtier.

Selon une autre caractéristique alternative de l'invention, le boîtier est exempt de capot de verrouillage, et la sortie de la borne hors du sol libère directement l'accès à une prise, par exemple une prise quatre broches.

Selon, une autre forme de réalisation avantageuse de l'invention, le châssis comporte un raccordement à une évacuation d'eau et, le compartiment électrique intégré dans le boîtier est étanche de telle sorte que lesdites bornes peuvent être aisément nettoyables et lavables à l'eau.

Cette caractéristique s'avère tout à fait avantageuse, notamment dans le cadre des permissionnaires de marché, lorsque l'on connaît les conditions dans lesquelles doit s'effectuer le nettoyage des places après la tenue de ces marchés.

Avantageusement, le verrouillage ou le déverrouillage de la trappe s opère au moyen d'un système à clé spéciale, plus particulièrement destiné aux équipements pour parcs forains, et plus spécifiquement pour des emplacements dédiés ou affectés, et non plus en libre service.

Selon une autre forme de réalisation de l'invention, la trappe affleurante n'est pas verrouillée en périodes de non - utilisation, et une simple traction au niveau d'une encoche ménagée à cet effet d'une part, et destinée à permettre le passage du conducteur électrique de raccordement à l'appareil branché d'autre part, permet de libérer l'accès au socle de la prise.

La manière dont l'invention peut être réalisée et les avantages qui en découlent ressortiront mieux de l'exemple de réalisation qui suit donné à titre indicatif et non limitatif à l'appui des figures annexées.

La figure 1 est une représentation schématique en perspective d'une forme de réalisation de la borne en position fonctionnelle, capot de verrouillage fermé.

La figure 2 est une vue analogue à la figure 1, capot de verrouillage ouvert.

La figure 3 est une représentation schématique de la borne escamotée dans le sol.

La figure 4 est une représentation schématique en section d'une autre forme de réalisation de l'invention, en position fonctionnelle, trappe fermée (en traits pleins) et ouverte (en traits mixtes), dont la figure 5 est une vue de dessus.

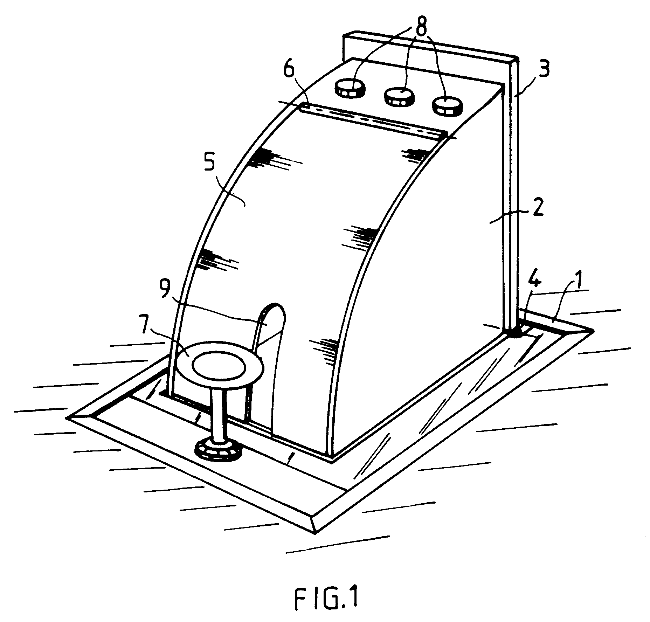

On a représenté au sein de la figure 1, une borne conforme à l'une des formes de réalisation de l'invention, en position sortie par rapport au sol. Cette borne comprend fondamentalement un châssis (1), par exemple réalisé en fonte d'aluminium, revêtu d'une protection de surface.

Ce châssis est de forme parallélipipédique, et on peut observer sur la figure 1 le bord supérieur émergeant à ras du sol. Ce châssis est destiné à recevoir un boîtier, portant la référence générale (2), articulé selon un axe d'articulation (4), au niveau de l'un des bords supérieurs dudit châssis.

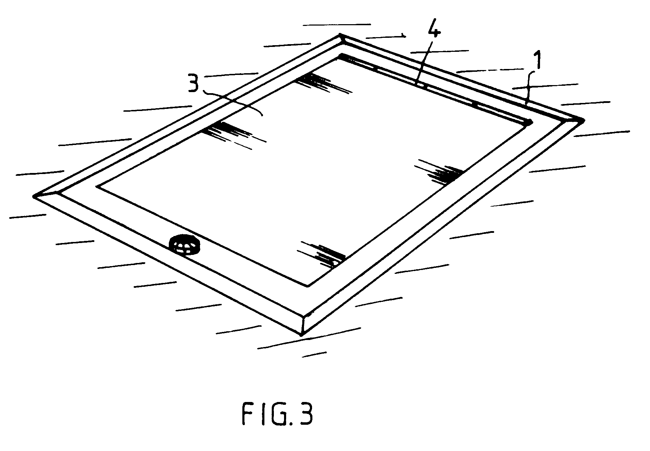

Dans l'exemple décrit, ce boîtier présente une forme sensiblement en secteur cylindrique dont la génératrice est constituée justement par l'axe d'articulation (4). Il est défini par deux faces latérales sensiblement perpendiculaires l'une par rapport à l'autre, concourant au niveau du point d'articulation (4), et reliées entre elles au moyen de secteurs en forme de portion de disque. L'une (3) desdites faces latérales constitue la trappe supérieure susceptible d'être verrouillée en position escamotée, c est à dire affleurant à la surface du sol, ainsi qu'on peut l'observer sur la figure 3, et ce par exemple au moyen d'une clé (7).

Ce boîtier (2) comporte en outre un capot (5), articulé en (6) selon un axe parallèle à l'axe d'articulation (4) du boîtier par rapport au châssis (1). Ce capot (5) est en forme de secteur cylindrique, dont l'incurvation correspond à celle des portions de disque définissant ledit boîtier. Il comporte au niveau de son bord libre opposé à l'axe d'articulation (6), une lumière (9) débouchant vers l'extérieur. Cette lumière est destinée à permettre le passage du câble électrique d'un appareil électrique branché sur une prise ou socle (10) du boitier (2), lorsque ledit capot est verrouillé.

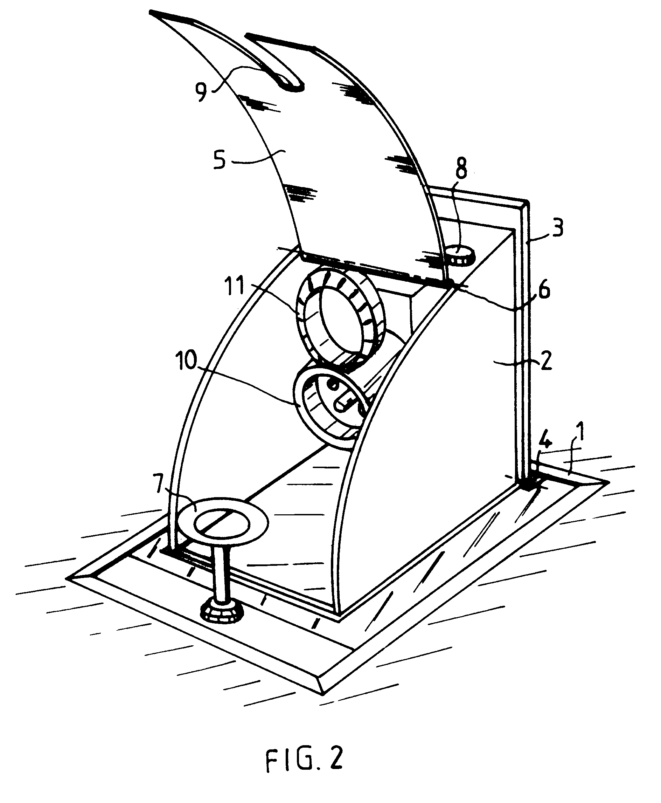

On a représenté sur la figure 2 le capot (5) en position déverrouillée. Dans une telle position, il libère l'accès au socle de raccordement (10), fixé au sein du boîtier, et raccordé à un compartiment électrique étanche non représenté. Ce socle (10) est en outre éventuellement protégeable au moyen d'un bouchon (11), par exemple réalisé en matière plastique, susceptible de venir s'enficher sur le socle (10), et maintenu en permanence au voisinage de celui-ci par un lien en plastique, et ce de manière connue, afin d'éviter sa perte en période d'utilisation de la prise.

Enfin et ainsi qu'on peut l'observer référencé (8) sur la figure 1, il est ménagé au niveau supérieur dudit boîtier (2) un voyant électromagnétique menagé derrière une fenêtre active positionnée au niveau de la face visible de la trappe (3), lorsque la borne est escamotée, affichant une couleur verte au repos, c'est à dire pendant les périodes de non-utilisation de la borne, et une couleur rouge en cas de dysfonctionnement.

Il va être décrit maintenant plus en détail le fonctionnement d'une telle borne. Lorsque la borne n'est pas utilisée, elle demeure escamotée dans le sol, affleurant à la surface de celui-ci, le boîtier (2) reposant au sein de la borne par la trappe (3), prenant partiellement appui sur le cadre (1) du châssis.

Dans certains cas, en fonction des utilisations et du lieu d'implantation de ces bornes, celles-ci peuvent être balisées par une signalisation lumineuse, faisant par exemple le pourtour de l'extrémité supérieure du châssis.

Lorsque l'on désire utiliser cette borne, l'utilisateur se fait délivrer une clé correspondante (7), consignée par exemple, permettant ainsi le déverrouillage de la trappe (3). L'actionnement de la clé (7) libère la borne de distribution, qui peut être escamotée hors du chassis par simple traction manuelle, la trappe (3) pivotant autour de l'axe d'articulation (4), et présentant alors une orientation sensiblement perpendiculaire par rapport au plan du sol.

Le capot (5) est déverrouillé automatiquement, par exemple par coupure d'un relais électro-magnétique, permettant ainsi de libérer l'accès au socle (10) d'une prise femelle, et donc le libre branchement de tout appareil électrique au niveau de cette prise.Typiquement, cette prise est une prise de raccordement monophasée fonctionnant sur le 240V/16A.

Une fois ce branchement effectué, l'utilisateur abaisse le capot de protection (5), qui de par la présence de la fente (9) à sa base permet le libre passage du câble ou du fil électrique de raccordement à la prise mâle.

L'utilisateur peut alors se rendre à la borne de paiement, dont dépend la borne de distribution à laquelle il s'est connecté. Il introduit sa carte de paiement, par exemple constituée par une carte magnétique ou une carte à puces, comportant de manière connue, une quantité déterminée d'heures de connexion. Il indique alors son numéro d'emplacement, reporté sur la borne de distribution, puis la durée souhaitée de distribution de courant. Il retire sa carte de la borne de paiement, la borne de distribution indiquée étant alors sous tension. La borne étant en cours de distribution d'énergie, la capot de protection (5) ne peut être dans ce cas déverouillé, de sorte qu'il n'est pas possible de retirer la prise. Parallèlement, la clé (7) reste "prisonnière" dans son logement prévu à cet effet. En fin d'utilisation, que la durée de fourniture d'électricité ait expiré ou non, l'utilisateur se rend à nouveau à la borne de paiement, introduit sa carte, et indique son numéro d'emplacement. Dans l'hypothèse où la durée de fourniture n'est pas terminée, il est demandé par voie interactive (écran - clavier) à l'utilisateur s'il souhaite se déconnecter. S'il souhaite effectivement se déconnecter, ou dans l'hypo-thèse où la durée de fourniture d'électricité est terminée, la borne de distribution est mise hors tension, le capot (5) est déverrouillé, et ledit utilisateur peut alors retirer sa prise, et escamoter la borne au sein du chassis.

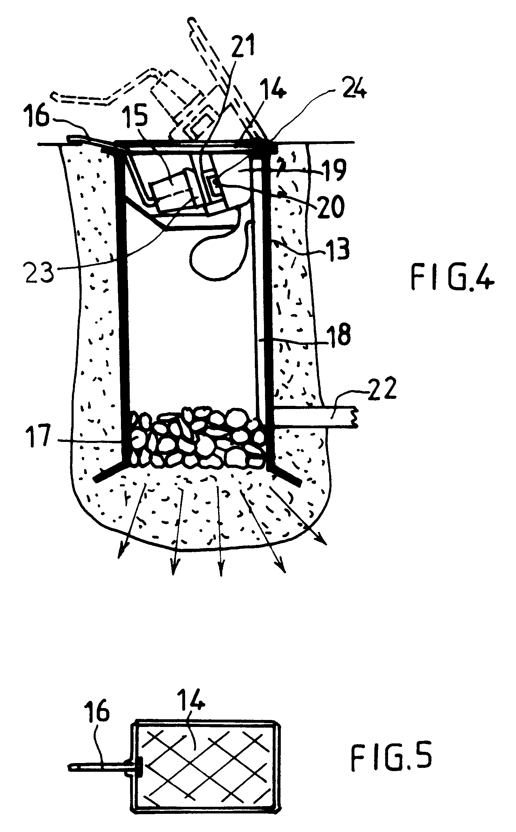

Dans une autre forme de réalisation de l'invention plus particulièrement décrite en liaison avec la figure 4, la borne de distribution demeure escamotable, et comme dans l'exemple précédemment décrit, est tractée manuellement hors du châssis encastré dans le sol. Ce châssis est en fait constitué par une cuve (13) réalisée en polyester armé en fibres de verre, par exemple, assurant le drainage de l'eau, et dont l'extrémité inférieure aboutit de fait au niveau d'un puits perdu (17). Cette cuve (13) est obturée à sa partie supérieure au moyen d'une trappe (14), également réalisée en polyester armé haute résistance. Cette trappe est articulée sur l'un des bords du chassis, permettant ainsi de libérer l'accès au socle (23) d'une prise ou fiche mâle (15). En revanche, la trappe ne comporte pas de capot de protection.

La prise femelle ou socle (23) utilisée est spécifique à l'utilisation de la borne sur la voie publique, et ne peut recevoir de fiche mâle domestique traditionnelles du types 16 Ampères - deux phases - terre. En outre, ledit socle comporte un dispositif de verrouillage électro-magnétique de la fiche au sein du socle. Cette fiche comporte quatre contacts, respectivement deux contacts principaux, un contact de terre, et un contact auxiliaire, destiné à détecter le raccordement avec l'utilisation d'un fil pilote, servant également de contrôle de la continuité de la terre entre le socle et l'appareil électrique branché sur ledit socle.

Le socle (23) comporte également un disjoncteur différentiel (20), par exemple 50 mA, réenclenchable par l'utilisateur au moyen d'un carré ou d'un triangle, et ce de manière connue. Ce disjoncteur est associé à un témoin d'état (24) protégé par un capot de protection transparent (21).

Les connecteurs électriques sont acheminés au niveau du socle (23) par l'intermédiaire d'une goulotte de protection (22), courant dans le sol et pénétrant dans la cuve (13) au voisinage de son extrémité inférieure, remonte (18) dans celle-ci jusqu'à atteindre un compartiment étanche (19), situé derrière le socle (23).

Le mode de fonctionnement de cette borne est identique à celui décrit précédemment, à la différence près que l'interdiction d'ôter la fiche hors du socle est assurée par le dispositif de verrouillage de la fiche au sein du socle, et non par un capot de protection. Par ailleurs, une fois la fiche en place sur le socle, la trappe (14) est refermée, le cable (16) d'alimentation reliée à la fiche mâle (15) étant susceptible de passer par un orifice réalisé par construction au niveau de l'accès à l'ouverture de la trappe. Par ailleurs, la borne est munie d'une carte électronique, détectant la présence d'une fiche (15) au sein du socle (23), et assurant l'interface avec la borne de paiement pour induire l'ordre de verrouillage, notamment électromagnétique de la fiche (15) au sein du socle (23), préalablement à la mise sous tension de ladite borne.

L'ensemble trappe-boitier et châssis est par exemple réalisé en fonte d'aluminium ou en résine époxyde ou polyester chargée en fibres de verre, avec une protection de surface. Il est susceptible de résister au stationnement d'un camion d'une masse typique de 40 tonnes.

Parallèlement, la borne ainsi réalisée de telle sorte à même en position ouverte, être de conception anti-vandalisme.

Ainsi qu'on l'aura compris, la borne de distribution conforme à l'invention est enterrée. Elle comprend avantageusement un drainage de l'eau (puits perdu), le compartiment électrique recevant le socle de la prise et le disjoncteur différentiel étant étanche. De par sa conception, il est possible d'installer une telle borne sur des pentes importantes, pouvant atteindre 10%.

Bien que plus particulièrement décrite en liaison avec les bornes de distribution d'énergie électrique pour les permissionaires de marché, il est bien entendu que l'invention ne saurait se limiter à cette seule application, et que toutes les infrastructures réclamant d'une manière ou d'une autre la distribution d'énergie électrique à partir du réseau basse tension entrent dans son champ de protection.

Cette borne de distribution escamotable présente de nombreux avantages, parmi lesquels on peut citer :
- la possibilité d'obtenir un réel libre-service au niveau de la distribution d'électricité ;
- la préservation de la sécurité dans le cadre de cette distribution, de par la conception même des bornes de distribution en liaison avec les bornes de paiement ;
- la réponse à une réelle demande, notamment sur la voie publique, mais également au niveau d'infrastructures sportives ou de loisirs.

## Revendications

1. Borne de distribution d'énergie électrique, munie d'un socle (10, 23) de raccordement au niveau duquel est susceptible d'être branchée la fiche mâle (15) de tout appareil électrique, ***caractérisée*** en ce qu'elle est escamotable et en ce qu'elle est constituée d'un chassis (1, 13) encastré dans le sol ou dans un mur, obturé par une trappe (3, 14) articulée (4) sur le châssis (1, 13), éventuellement verrouillable, libérant l'accès à un compartiment (2) intégrant le socle de raccordement (10, 23) de ladite fiche mâle (15), ledit compartiment étant complètement escamotable au sein du châssis, et en ce qu'elle est reliée à une borne de paiement assurant la gestion de sa mise sous tension.

2. Borne de distribution d'énergie électrique selon la revendication 1, ***caractérisée*** en ce que le compartiment (2) est solidaire de la trappe (3), et est donc articulé (4) sur le chassis, et en ce qu'il comporte un capot de verrouillage (5), susceptible d'interdire l'accès à la prise ou socle de raccordement (10) lorsque la borne est sous tension.

3. Borne de distribution d'énergie électrique selon la revendication 2, ***caractérisée*** en ce que le capot (5) est articulé (6) au niveau du compartiment (2), et présente une découpe (9) de dimensions suffisamment étroites pour n'autoriser que le seul passage de câble électrique prolongeant la prise mâle venant s'enficher dans la prise femelle de raccordement électrique (10) dudit compartiment.

4. Borne de distribution d'énergie électrique selon l'une des revendications 1 à 3, ***caractérisée*** en ce que l'ouverture de la trappe (3) s'effectue au moyen d'une clé (7), actionnant un dispositif de verrouillage intégré au sein du chassis (1).

5. Borne de distribution d'énergie électrique selon la revendication 1, ***caracterisée*** en ce que le socle de raccordement (23) comprend un dispositif de verrouillage de la fiche mâle (15) au sein dudit socle, interdisant le retrait de ladite fiche hors du socle lorsque la borne de distribution est sous tension.

6. Borne de distribution d'énergie électrique selon la revendication 5, ***caractérisée*** en ce que le dispositif de verrouillage de la fiche mâle (15) au sein du socle de raccordement (23) est à fonctionnement électro-magnétique.

7. Borne de distribution d'énergie électrique selon l'une des revendications 5 et 6, ***caractérisée*** en ce que le socle de raccordement (23) est constitué par une prise quatre contacts, comportant deux contacts principaux correspondant aux phases, un contact de terre, et un contact auxiliaire, destiné à détecter le raccordement avec l'utilisation d'un fil pilote, servant également de contrôle de la continuité de la terre entre le socle et l'appareil électrique branché sur ledit socle.

8. Borne de distribution selon l'une des revendications 5 à 7, ***caractérisée*** en ce qu'elle comprend une carte électronique, destinée à détecter la présence de la fiche mâle (15) au sein du socle (23), et d'assurer l'interface avec la borne de paiement, de telle sorte à induire le verrouillage de ladite fiche au sein du socle, préalablement à la mise sous tension de ladite borne.
